# EUROPEAN PATENT APPLICATION

(11) **EP 4 814 551 A1**
(43) Date of publication of application: **30.09.2026**
(21) Application number: 26157668.0
(22) Date of filing: 10.02.2026
(51) Int. Cl.: G02B 6/136, G02B 6/12, G02B 6/125, G02B 6/13

(54) **OPTICAL WAVEGUIDE COLOR CENTER CREATION SYSTEM**

(30) Priority: 29.03.2025 US 202519094825
(71) Applicant: The Boeing Company, Arlington, VA 22202 (US)
(72) Inventor: Yurash, Brett Alexander, Arlington, 22202 (US)
(74) Representative: Collins, Emily Jane

(57) **Abstract**

An optical waveguide system (104, 210, 300, 500, 700, 800, 900) comprising a primary optical waveguide (120, 220, 301, 501, 701, 801) and a color center generation optical waveguide (121, 221,302, 502, 702, 802, 902). The primary optical waveguide (120, 220, 301, 501, 701, 801) comprises a material at a location (222, 307, 507, 704, 804, 904) in the primary optical waveguide (120, 220, 301, 501, 701, 801) that can support formation of a color center (203, 309, 509, 709, 809, 909). The color center generation optical waveguide (121, 221,302, 502, 702, 802, 902) has an output (223, 304,) positioned substantially perpendicular to a direction of light travel at the location (222, 307, 507, 704, 804, 904) in the primary optical waveguide (120, 220, 301, 501, 701, 801). The output (223, 304,) is directed at the location (222, 307, 507, 704, 804, 904).

## Description

### BACKGROUND INFORMATION

### 1. Field:

The present disclosure relates generally to optical waveguide systems and in particular, to optical waveguide configurations that enable creation of color centers in optical waveguides.

### 2. Background:

Optical waveguides have color centers. A color center in an optical waveguide is a defect, imperfection, or other anomaly within material forming the optical waveguide. For example, the defect can be a point defect in a crystal lattice that can absorb and emit light at specific wavelengths. These types of defects can arise when one or more atoms in a crystal is missing or replaced by a different atom resulting in localized electronic states that interact with photons.

A color center can operate as a localized light emission structure. This color center can emit light at specific wavelengths. This color center light can be a single photon or broadband of light when excited by light traveling through the optical waveguide. The manner in which light is emitted from a color center can be created to have specific optical and quantum properties.

With these properties, a color center in an optical waveguide can have many applications. For example, an optical waveguide with the color center can be used in quantum systems. For example, this optical waveguide can be a single photon source for optical computing and security communications.

In another example, an optical waveguide with the color center can be used in a sensor. The properties of light generated by the color center can change in response to changes in a temperature, a strain, an electric field, or a magnetic field.

### SUMMARY

An embodiment of the present disclosure provides an optical waveguide system comprising a primary optical waveguide and a color center generation optical waveguide. The primary optical waveguide comprises a material at a location in the primary optical waveguide that can support formation of a color center. The color center generation optical waveguide has an output positioned substantially perpendicular to a direction of light travel at the location in the primary optical waveguide. The output is directed at the location.

Another embodiment of the present disclosure provides an optical waveguide system comprising a primary optical waveguide, color center generation optical waveguide, and a gap between the primary optical waveguide and the output of the color center generation optical waveguide. The primary optical waveguide comprises a material at a location in the primary optical waveguide that can support formation of a color center. The color center generation optical waveguide with a tapered section having an output positioned substantially perpendicular to a direction of light travel at the location in the primary optical waveguide. The output is directed at the location.

Still another embodiment of the present disclosure provides a method for creating a color center. Characteristics are selected for a laser beam that creates the color center. The laser beam is transmitted at a location for the color center in a primary optical waveguide, wherein the laser beam is transmitted from a color output of a color center generation optical waveguide without coupling the laser beam to optical modes for the primary optical waveguide.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of a photonic processing system in which illustrative embodiments may be implemented;
**Figure 2** is an illustration of a block diagram of a color center creation environment in accordance with an illustrative embodiment;
**Figure 3** is an illustration of a top view of optical waveguides in an optical waveguide system in accordance with an illustrative embodiment;
**Figure 4** is an illustration of a cross-sectional view of a primary optical waveguide in accordance with an illustrative embodiment;
**Figure 5** is an illustration of a composite top view of optical waveguides in an optical waveguide system in accordance with an illustrative embodiment;
**Figure 6** is an illustration of a cross-sectional view of a primary optical waveguide in accordance with an illustrative embodiment;
**Figure 7** is an illustration of a top view of optical waveguides in an optical waveguide system in accordance with an illustrative embodiment;
**Figure 8** is an illustration of a top view of optical waveguides in an optical waveguide system in accordance with an illustrative embodiment;
**Figure 9** is an illustration of a top view of optical waveguides in an optical waveguide system in accordance with an illustrative embodiment;
**Figure 10** is an illustration of a flowchart of a process for getting a color center in accordance with an illustrative embodiment;
**Figure 11** is an illustration of a flowchart of a process for determining whether a color center has been created in accordance with an illustrative embodiment;
**Figure 12** is an illustration of a flowchart of a process for transmitting a laser beam in accordance with an illustrative embodiment;
**Figure 13** is an illustration of a flowchart of a process for transmitting a laser beam in accordance with an illustrative embodiment;
**Figure 14** is an illustration of a flowchart of a process for coupling an input in a waveguide in accordance with an illustrative embodiment;
**Figure 15** is an illustration of a flowchart of a process for routing light generated from transmitting a laser beam through a primary waveguide in accordance with an illustrative embodiment; and
**Figure 16** is an illustration of a flowchart of a process for generating a color center in accordance with an illustrative embodiment.

### DETAILED DESCRIPTION

The illustrative embodiments recognize and take into account one or more different considerations as described herein. For example, the illustrative embodiments recognize and take into account that current techniques for creating color centers may not provide a desired level of quality in an optical waveguide or may not provide a desired level of precision in color center placement in the optical waveguide.

One current technique involves pick and place heterogeneous integration in which color center materials are fabricated and then placed on a desired location on the optical waveguide. This technique has very low yields.

Another technique involves creating color centers using ion implantation. Ion implantation can be performed using surface masking with the ion beam or a focused ion beam. This technique can result in residual lattice damage that degrades the performance of the optical waveguide. Further, this technique also introduces an additional process in the fabrication process flow. This additional process involves moving the substrate on which the optical waveguide with the color center is being fabricated from one station to another station. The substrate can be a wafer or other type of substrate. Equipment used for ion implantation can also be complex, large and expensive.

Another technique is focused electron beam irradiation. This type of color center generation has poor depth resolution for color center placement resulting from the long penetration depth of the electrons. Further, bulky, expensive, and specialized equipment is needed for this type of color center generation.

Color centers can also be created for an optical waveguide through direct writing using laser beams. The laser beams used can be near infrared (NIR) laser beams and ultraviolet (UV) laser beams. The use of laser beams, however, has poor depth resolution for color center placement. Also, the use of laser beams can also result in significant surface damage caused by laser ablation. This type of damage can impact the performance of the optical waveguide in a negative manner.

Further, laser-based techniques also can involve using confocal microscopy setups. Additionally, the generation of color centers are monitored at cryogenic temperatures and cryogenic confocal microscopy is a time-consuming and difficult process to perform. The setups require moving the wafer or substrate on which the optical waveguide is being fabricated to another station for confocal microscopy.

These different techniques can add additional steps in the fabrication process flow. Further, these different techniques also involve complex equipment configuration and setup.

Further, with current techniques for creating color centers, more than one color center may be created. These additional color centers may be in locations other than a desired location within the optical waveguide.

Thus, it is desirable to have a method, apparatus, and system that can operate to create color centers with a greater level of precision and less complexity as compared to current techniques. In one illustrative example, photonic structures are present that enable the creation of color centers in a photonic integrated circuit. Photonic structures are materials or devices that manipulate light through at least one of reflection, refraction, diffraction, or interference, enabling functions like waveguiding, filtering, and optical confinement in applications such as communications, sensing, and quantum technologies.

The color centers can also be referred to as solid-state quantum defects or defects in a photonic integrated circuit. A photonic circuit is an integrated system of optical components. These components can be waveguides, modulators, and detectors that process and transmit light signals. These circuits can have applications in communication, sensing, and computing in a manner similar to how electronic circuits process electrical signals.

In one illustrative example, a number of optical waveguides route laser beam pulses to an area of interest in a primary optical waveguide. As used herein, a "number of" when used with reference to items mean one or more items. For example, a number of optical waveguides is one or more optical waveguides.

These laser beam pulses have characteristics that can create one or more color centers in a defined area of interest. This area of interest is also referred to as a location in the optical waveguide.

One illustrative example enables color center creation after the primary photonic circuit has been fabricated. Once the number of color centers are created, the optical waveguides used to deliver laser beam pulses for color center creation remain without needing further processing to be removed. These waveguides do not substantially affect the performance of the photonic circuit.

Further, an illustrative example can include other circuit components that enable real time in-situ monitoring of the color center creation process. This monitoring enables the deterministic placement of a desired number of color centers in the area of interest.

This color center creation in the illustrative example is in contrast to current techniques. Current techniques have drawbacks including at least one of requiring that the creation occurs at an early stage of the photonic circuit fabrication process, not being amenable to in-situ feedback of the creation process, not having a well-defined locality to color center placement, damaging the host material, and using expensive, or bulky equipment that adds to the manufacturing process complexity.

Further, the phrase "at least one of," when used with a list of items, means different combinations of one or more of the listed items can be used, and only one of each item in the list may be needed. In other words, "at least one of" means any combination of items and a number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combination of these items can be present. In some illustrative examples, "at least one of" can be, for example, without limitation, two of item A; one of item B; and ten of item C; four of item B and seven of item C; or other suitable combinations.

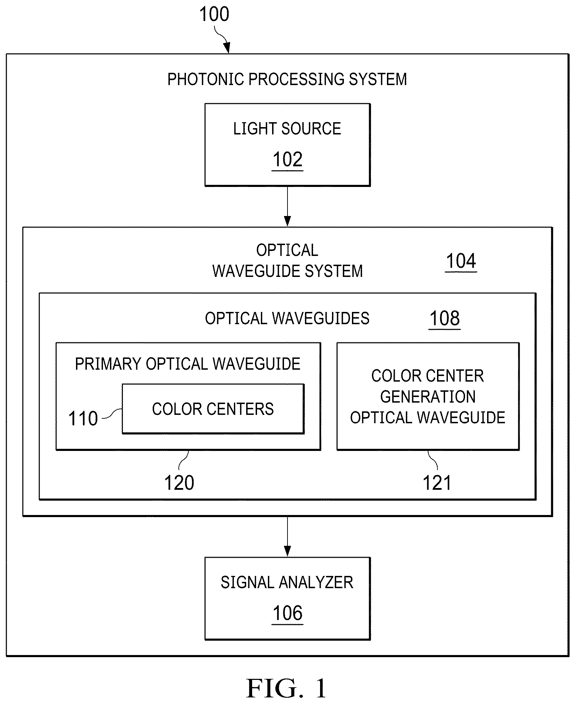

With reference now to the figures and, in particular, with reference to **Figure 1****,** an illustration of a photonic processing system is depicted in which illustrative embodiments may be implemented. In this illustrative example, photonic processing system **100** comprises light source **102,** optical waveguide system **104,** and signal analyzer **106.** Photonic processing system **100** can be used in quantum processing, sensors, communications, or other suitable applications.

In this illustrative example, light source **102** provides light to optical waveguide system **104.** In this illustrative example, light source **102** can take a number of different forms. For example, light source can be selected from at least one of a laser beam generator, a light-emitting diode (LED), a single photon source, or other types of light sources.

In this example, optical waveguide system **104** includes optical waveguides **108.** These optical waveguides are comprised of materials that can propagate light. For example, these optical waveguides can be comprised of material selected from at least one of silicon, silicon carbide, silicon nitride, aluminum nitride, silicon dioxide, lithium niobate, aluminum nitride, silica glass, phosphate glass, sapphire, borosilicate glass, and other suitable materials that may be used to fabricate optical waveguides that propagate light.

As depicted, optical waveguides **108** are comprised of primary optical waveguide **120** and color center generation optical waveguide **121.**

Primary optical waveguide **120** includes a number of color centers **110.** In this illustrative example, color center generation optical waveguide **121** can be operated during manufacturing of optical waveguides **108** to propagate a laser beam to create the number of color centers **110** in primary optical waveguide **120.** This optical waveguide is not removed after manufacturing of optical waveguide system **104** is completed.

During operation of photonic processing system **100,** this light is transmitted into optical waveguide system **104.** The light propagates through optical waveguide system **104.** The light propagates through primary optical waveguide **120** and excites a number of color centers **110** within primary optical waveguide **120.** This excitement can generate additional light. This additional light is referred to as color center light.

This color center light is detected by signal analyzer **106.** Signal analyzer **106** is a component that performs detection and processing of the color center light as well as any other light propagating through optical waveguides **108** that can be detected.

Signal analyzer **106** can include a photodetector system to detect the light output by optical waveguide system **104.** Additionally, signal analyzer **106** can also include a processor, storage, memory, and other components used to analyze color center light detected in optical waveguide system **104.** Signal analyzer **106** can analyze the color center light for quantum processing, sensors, communications, or other suitable applications. In this example, when photonic processing system **100** takes the form of a temperature sensor, signal analyzer **106** detects light emitted by the number of color centers **110.** The temperature is determined based on the characteristics of the light emitted by the number of color centers **110.** As another example, photonic processing system **100** operates as a memory, and light emitted by the number of color centers **110** can be analyzed by signal analyzer **106** to determine the data stored using the number of color centers **110.**

Other optical waveguides can also be present within optical waveguides **108** in addition to these optical waveguides. Further, the light emitted by the light source can also propagate to other optical waveguides in optical waveguides **108** in addition to or in place of primary optical waveguide **120** during operation of photonic processing system **100.** For example, other optical waveguides can be present in optical waveguides **108** that also include one or more color centers that can be excited in response to light from light source **102.**

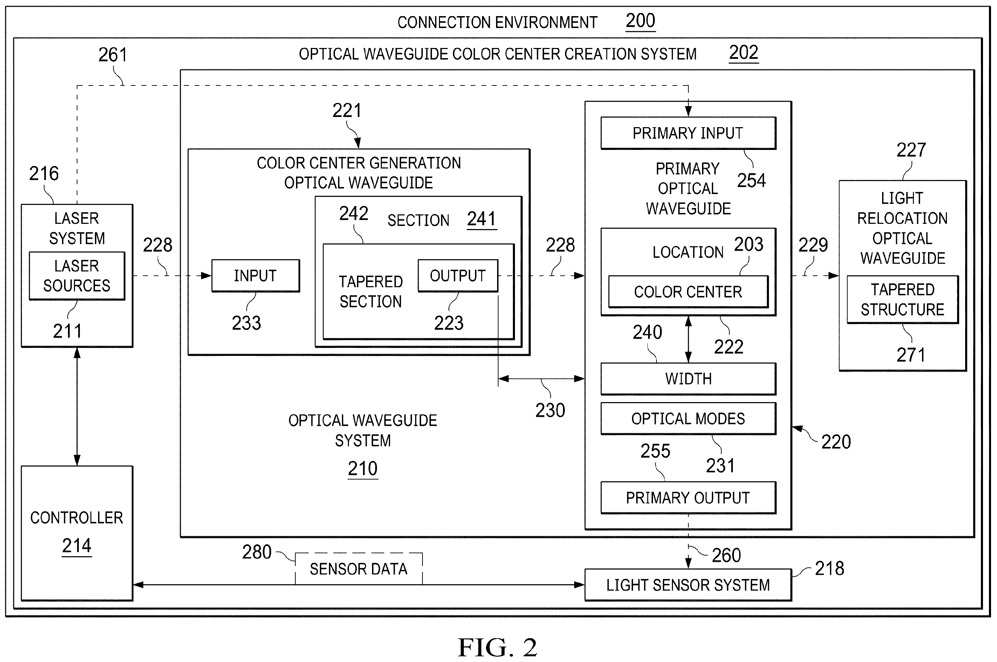

With reference now to **Figure 2****,** an illustration of a block diagram of a color center creation environment is depicted in accordance with an illustrative embodiment. In this illustrative example, optical waveguide color center creation system **202** in color center creation environment **200** operates to generate color center **203.**

In this illustrative example, optical waveguide color center creation system **202** includes a number of different components. As depicted, optical waveguide color center creation system **202** comprises optical waveguide system **210,** controller **214,** laser system **216,** and light sensor system **218.** Optical waveguide system **210** is an example of an implementation for optical waveguide system **104** in **Figure 1****.**

Laser system **216** is configured to generate laser beams used in creating color center **203.** As depicted, laser system **216** comprises a number of laser sources **211.** Each laser source can generate a laser beam.

As depicted, optical waveguide system **210** comprises primary optical waveguide **220** and color center generation optical waveguide **221.** Primary optical waveguide **220** is an example of primary optical waveguide **120** in **Figure 1****.** In this example, primary optical waveguide **220** is comprised of a material at location **222** in the primary optical waveguide **220** that can support formation of color center **203.** Primary optical waveguide **220** can be comprised of a first material at location **222** and color center generation optical waveguide **221** can be comprised of a second material that is different from the first material. In other examples, these waveguides can be comprised of the same material. Materials at location **222** can include at least one of silicon carbide, silicon nitride, silicon, diamond, boron nitride, aluminum nitride, lithium niobate. For example, primary optical waveguide **220** can be silicon nitride and location **222** can be a diamond. In this example, location **222** is a region in which color center generation is desired to generate color center **203.** This region can be specified based on the design of primary optical waveguide **220.**

Further, the design of location **222** can be such that the generation of color center **203** can be more accurately selected in the direction across the cross-section of primary optical waveguide **220.** For example, primary optical waveguide **220** has width **240** at location **222** that is narrower than other portions of primary optical waveguide **220.** For example, width **240** is a width of the cross-section of primary optical waveguide **220.** This selection of width **240** enables more precisely locating color center **203** in primary optical waveguide **220.**

In this example, color center generation optical waveguide **221** is an example of color center generation optical waveguide **121** in **Figure 1****.** In this illustrative example, color center generation optical waveguide **221** has input **233** and output **223.** In one illustrative example, color center generation optical waveguide **221** has section **241** that narrows to form tapered section **242** including output **223.** With this example, output **223** forms a tip for tapered section **242.**

The manner in which section **241** tapers to form tapered section **242** can be selected to provide desired characteristics for laser beam **228** as laser beam **228** is transmitted from output **223.** For example, the size or diameter of laser beam **228,** the amount of reflection, and other properties of laser beam **228** can be affected based on the design of tapered section **242.**

Input can be coupled to a laser source in laser sources **211** that generates laser beam **228** that is transmitted from output **223** through primary optical waveguide **220.** Laser beam **228** can be selected from a group comprising a pulsed laser beam and a continuous laser beam. Laser beam **228** has beam characteristics selected from at least one of a number of pulses, an energy per pulse, a temporal pulse width, or a wavelength that are selected to generate color center **203** at location **222.** The wavelength can be above the bandgap or below the bandgap of the material in primary optical waveguide **220** at location **222.** Selecting the wavelength to be above or below the bandgap of the material can result in multi-photoionization that results in the generation of defects for a color center. Characteristics selected for laser beam **228** can vary depending on the material used in primary optical waveguide **220** at location **222.**

In one illustrative example, these beam characteristics are selected to create a defect to form the color center **203.** In another example, these beams are selected to create a defect to form the color center and subsequently to anneal the defect to at least one of form or modify the color center.

For example, laser beam **228** has a first wavelength selected to create the defect and laser beam **228** has a second wavelength selected to anneal the defect.

Color center generation optical waveguide **221** has output **223** that is positioned substantially perpendicular to a direction of light travel at location **222** in primary optical waveguide **220.** In this example, output **223** is directed at location **222.**

In this example, substantially perpendicular means perpendicular or almost perpendicular. In this example, output **223** of color center generation optical waveguide **121** is positioned substantially perpendicular such that light from a laser beam **228** transmitted from output **223** into primary optical waveguide **220** at location **222** has an angle such that the light from laser beam **228** propagating in primary optical waveguide **220** does not couple to optical modes **231** for primary optical waveguide **220.** The selection of the wavelength for the laser beam can also impact the amount of coupling. The lack of propagation through primary optical waveguide **220** resulting from coupling can reduce the probability that color center **203** is generated outside of location **222.**

Further, location **222** can be an elongate region across primary optical waveguide **220** in a direction where the laser beam **228** transmitted from output **223** enters primary optical waveguide **220** and exits primary optical waveguide **220.**

In this illustrative example, the propagation of laser beam **228** through location **222** for primary optical waveguide **220** results in the generation of color center **203.** In this example, the generation of color center **203** or additional color centers outside location **222** is undesirable. The reduction in this type of generation of color centers can occur when coupling of laser beam **228** to optical modes **231** for primary optical waveguide **220** is absent or reduced.

In this example, optical modes **231** are patterns of electromagnetic field distribution that can travel through primary optical waveguide **220.** In this example, coupling to these optical modes is undesirable because the coupling can cause laser beam **228** to propagate to other locations within primary optical waveguide **220** outside of location **222.** As a result, a number of color centers can be generated outside of location **222.**

In some illustrative examples, optical waveguide system **210** can also include light relocation optical waveguide **227.** This waveguide is an optional waveguide and may not be present in all examples.

With this example, color center generation optical waveguide **221** is located on a first side of primary optical waveguide **220** and light relocation optical waveguide **227** is located on a second side of primary optical waveguide **220.** In other words, light relocation optical waveguide **227** is positioned to capture or collect light **229** exiting primary optical waveguide **220** and propagate light **229** to another location without light **229** substantially interacting with primary optical waveguide **220.**

With this example, light relocation optical waveguide **227** is positioned to collect light **229** exiting primary optical waveguide **220** in which light **229** results from laser beam **228** transmitted by color center generation optical waveguide **221** that propagates through location **222** in primary optical waveguide **220** and exits primary optical waveguide **220.** In other words, laser beam **228** emitted from output **223** propagates through location **222** without being coupled to propagate in a direction of light travel for primary optical waveguide **220.** Thus, light **229** exits on the other side of primary optical waveguide **220** and can be collected by light relocation optical waveguide **227.**

In one illustrative example, light relocation optical waveguide **227** has tapered structure **271** that collects light **229** exiting primary optical waveguide **220.** With this example, a first end of light relocation optical waveguide **227** closer to primary optical waveguide **220** is broader than a second end of light relocation optical waveguide **227.**

In this illustrative example, optical waveguide color center creation system **202** can operate to create color center **203** in location **222** in primary optical waveguide **220** in optical waveguide system **210.** In this example, optical waveguide color center creation system **202** also includes controller **214,** laser system **216,** and light sensor system **218.**

In this illustrative example, gap **230** is present between primary optical waveguide **220** and output **223** of color center generation optical waveguide **221.** Gap **230** is a distance or separation between output **223** and primary optical waveguide **220.**

In selecting gap **230,** a number of factors can be taken into account. For example, a larger gap will ensure guided light in primary optical waveguide **220** does not couple into color center generation optical waveguide **221.** However, laser beam **228** that exits the color center generation optical waveguide **221** will expand as the light from laser beam **228** approaches location **222** where the color center **203** is desired in primary optical waveguide **220.** Thus, gap **230** should not be so large such that the precision with which color center **203** can be located is be reduced.

In this illustrative example, laser beam **228** entering color center generation optical waveguide **221** is transmitted from output **223** into and through primary optical waveguide **220.** This laser beam does not substantially couple to optical modes **231** for primary optical waveguide **220.**

In this example, generation of color center **203** in location **222** in primary optical waveguide **220** is controlled by controller **214.** Controller **214** can be implemented in software, hardware, firmware or a combination thereof. When software is used, the operations performed by controller **214** can be implemented in program instructions configured to run on hardware, such as a processor unit. When firmware is used, the operations performed by controller **214** can be implemented in program instructions and data and stored in persistent memory to run on a processor unit. When hardware is employed, the hardware can include circuits that operate to perform the operations in controller **214.**

In the illustrative examples, the hardware can take a form selected from at least one of a circuit system, an integrated circuit, an application-specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field-programmable logic array, a field-programmable gate array, and other suitable hardware devices. Additionally, the processes can be implemented in organic components integrated with inorganic components and can be comprised entirely of organic components excluding a human being. For example, the processes can be implemented as circuits in organic semiconductors.

For example, controller **214** controls the operation of laser system **216** to generate laser beam **228.** Further, controller **214** can control the characteristics from laser beam **228** emitted by laser sources **211** in laser system **216.** Further, the operation of laser system **216** by controller **214** can be performed based on feedback received from light sensor system **218.**

Light sensor system **218** is comprised of a number of sensors. The sensors can include a photodiode, an avalanche photodiode, a phototransistor, a photomultiplier tube, a silicon photomultiplier, a charged coupled device, and other suitable types of sensors.

In this illustrative example, controller **214** creates color center **203** in location **222** using a process that uses laser system **216** and light sensor system **218.** For example, controller **214** selects a number of beam characteristics for laser beam **228** that creates color center **203.** Controller **214** transmits laser beam **228** at location **222** for color center **203** in primary optical waveguide **220** using laser system **216.** In this example, laser beam **228** is transmitted by laser system **216** into input **233** of color center generation optical waveguide **221** and is transmitted from output **223** of color center generation optical waveguide **221** through primary optical waveguide **220** without coupling laser beam **228** to optical modes **231** for primary optical waveguide **220.**

Controller **214** also transmits test laser beam **261** into primary input **254** of primary optical waveguide **220** using laser system **216.** Test laser beam **261** propagates through location **222** in primary optical waveguide **220.** If color center **203** is present in location **222,** laser beam **261** propagating through location **222** of primary optical waveguide **220** causes an excitation of color center **203** that results in generation of color center light. This color center light can be a portion of or all of light **260** emitted from primary output **255** in primary optical waveguide **220.**

Controller **214** detects light **260** at primary output **255** of primary optical waveguide **220** in response to test laser beam **261.** Light **260** is detected using light sensor system **218.** For example, light sensor system **218** can be configured to detect color center light in light **260.** If color center **203** is not present, the absence of this light is detected by light sensor system **218.**

In this example, light sensor system **218** generates sensor data **280** in response to detecting light **260.** This sensor data is sent by light sensor system **218** to controller **214** for analysis.

Sensor data **280** provides feedback as to whether color center **203** has been generated. For example, color center light can be created having characteristics such as a particular wavelength. Light **260** having this wavelength indicates that color center **203** has been generated using laser beam **228.**

Controller **214** determines whether light **260** detected by sensor system **218** has characteristics indicating that color center **203** is present using sensor data **280.** For example, the wavelength for the color center generation light can be different wavelengths from test laser beam **261** and from laser beam **228.**

Controller **214** repeats selecting the number of beam characteristics for laser beam **228** and transmitting laser beam **228** at location **222** for color center **203** in primary optical waveguide **220** in response to an absence of the characteristics indicating color center **203** is present.

In this example, this repeating of the process can involve changing the number of laser beam characteristics that are selected. For example, at least one of a number of pulses, an energy per pulse, a temporal pulse width, or a wavelength are selected to generate the color center at the location. In other examples, the characteristics are not changed in making a selection. In this case, the transmission of laser beam **228** performs using the same characteristics.

In this example, controller **214** can create color center **203** using real-time feedback from transmitting laser beam **228.** In one illustrative example, laser beam **228** is transmitted. Thereafter, test laser beam **261** is transmitted. In another illustrative example, both laser beam **228** and test laser beam **261** can be transmitted at the same time or overlap in transmission times.

This type of color center generation and detection can be performed using the same equipment. No need is present to move the substrate on which optical waveguide system **210** is located to another location or piece of equipment.

Thus, optical waveguide system **210** enables color center creation within a waveguide using another waveguide that is formed as part of this optical waveguide system. In other words, the waveguides depicted in optical waveguide system **210** can be constructed during the fabrication. As part of the fabrication process, color center generation optical waveguide **221** can operate to propagate laser beam **228** in a manner that causes the creation of color center **203** in location **222** of primary optical waveguide **220.** This creation of color center **203** can be performed without needing to move the substrate on which this waveguide system is located to another station or piece of equipment. The substrate can be a silicon wafer, glass, or silicon carbide wafer. As another example, the substrate can be a substrate that uses non-silicon material such as gallium nitride, aluminum nitride, sapphire substrate, an epitaxial growth on substrate, or some other suitable type of substrate.

As a result, additional operations where the substrate is moved to another station or piece of equipment is unnecessary in these illustrative examples. For example, moving the substrate to another station for confocal microscopy is unnecessary in the illustrative examples.

The illustration of color center creation environments in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, one or more color centers can be created in location **222** in addition to color center **203.** In yet other illustrative examples, color centers can be created in other locations in addition to location **222** within primary optical waveguide **220.** For example, one or more color center generation optical waveguides can be used in addition to color center generation optical waveguide **221** to create these color centers and other locations. As another example, laser beam **228** and test laser beam **261** can be transmitted to waveguides through at least one of an air interface, optical fibers, or other optical waveguides.

In yet another example, filters can be used to pass color center lights and light **260.** For example, optical filters may be present in the primary optical waveguide to the point that only passes color center light. These filters can pass light having a specific range of wavelengths expected for color center light. In another example, optical filters or other filters may be present in the light sensor system to filter to pass color center light or signals generated from color center light.

In another illustrative example, the determination of whether color center **203** has been created can be determined by detecting that the amount of coupling from the laser beam **228** (color center creation pulsed light) into primary optical waveguide **220** is less than the amount of light emitted from color center **203** into primary optical waveguide **220.** This determination allows knowing whether light **260** detected from primary optical waveguide **220** originates from color center **203.**

Thus, color center creation can be performed in an optical waveguide system in which a color generation optical waveguide is created on the same substrate as the primary optical waveguide. This color generation optical waveguide is present for the purpose of generating a color center within the primary optical waveguide. This color generation optical waveguide does not need to be removed after creating the color center.

Further, in some illustrative examples, the primary optical waveguide can be tested after the laser beam has been transmitted into and propagates through the location where the color center is desired. This testing can be performed by transmitting light through the primary optical waveguide as would be done during normal operation. The light output of the primary optical waveguide is analyzed to determine whether the light has characteristics indicating that the color center is present. If a color center is not present, a laser beam can be transmitted again with the same or different characteristics for creating the color center.

These different operations can be performed at the same station or location without needing to move the optical waveguide system to another location for testing or inspection by other complex equipment.

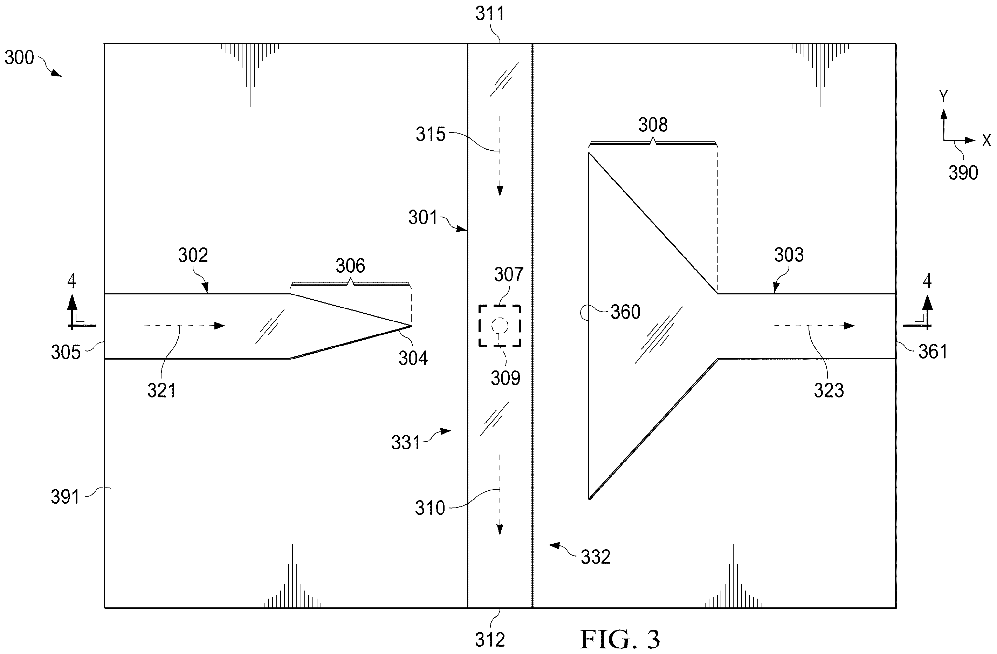

Turning next to **Figure 3****,** an illustration of a top view of optical waveguides in an optical waveguide system is depicted in accordance with an illustrative embodiment. In this example, optical waveguide system **300** is an example of an implementation of optical waveguide system **210** in **Figure 2****.**

As depicted, optical waveguide system **300** comprises primary optical waveguide **301,** color center generation optical waveguide **302,** and light relocation optical waveguide **303.** These waveguides are depicted from a top view on an XY plane **390.** As shown in this example, these waveguides have been formed on bottom cladding **391.** As depicted, color center generation optical waveguide **302** is located on first side **331** of primary optical waveguide and light relocation optical waveguide **303** is located on second side **332** of primary optical waveguide **301** as shown on XY plane **390.**

In this illustrative example, color center generation optical waveguide **302** has input **305** and output **304.** This output is also referred to as the tip of color center generation optical waveguide **302.** As depicted in this example, color center generation optical waveguide **302** has tapered section **306** that tapers down in width at output **304.** This taper is selected to focus laser beam **321** to propagate alone a line on which a defect is desired in location **307** to generate color center **309.** In other words, the location of the defect for the color center can be more precisely selected along the Y-axis of XY plane **390** using tapered section **306.**

In this illustrative example, pulsed laser beam **321** is transmitted into input **305** and propagates through color center generation optical waveguide **302** to be transmitted from output **304** of color center generation optical waveguide **302.** This pulsed laser beam can have a wavelength λ1 for defect creation and a wavelength λ2 for annealing. In other words, different pulses can have different wavelengths depending on the type of result desired.

The transmission of laser beam **321** from output **304** results from this laser beam propagating through location **307** in primary optical waveguide **301.** As depicted, color center generation optical waveguide **302** is positioned to be perpendicular or substantially perpendicular to the light of travel through primary optical waveguide **301** at location **307.** This orientation of laser beam **321** helps to reduce or eliminate coupling of laser beam **321** to modes in primary optical waveguide **301** as laser beam **321** propagates through primary optical waveguide **301.** In other words, laser beam **321** enters first side **331** of primary optical waveguide **501** and exits second side **332** of primary optical waveguide **301** on XY plane **390.**

In this example, light relocation optical waveguide **503** is designed to collect light **323** resulting from laser beam **321** propagating through primary optical waveguide **301** at location **307** and exiting on second side **332** of primary optical waveguide **301.** This light is propagated to another location without light **323** substantially interacting with primary optical waveguide **301.** For example, light relocation optical waveguide **303** can perform an off chip dump of light **323.** In this illustrative example, light relocation optical waveguide **303** has input **360** and output **361** with tapered structure **308.**

Further in this illustrative example, light **315** is an excitation light that can be transmitted into primary input **311** of primary optical waveguide **301.** Light **315** has wavelength λ3 that is selected to excite color center **309** in location **307** when this color center is present at this location. This light can be a laser beam, coherent light, polarized light, post light, or other types of light that can cause an excitation of color center **309.** In this example, the wavelength is different from wavelength λ1 and wavelength λ2 that can be used for laser beam **321.**

When color center **309** is present, color center **309** is excited and emits color center light **310** that is detected at primary output **312.** This color center light has wavelength λ4 that is expected in response to excitation of color center **309.** During manufacturing of color center **309,** this color center light can be used to indicate that color center **309** has been generated. If color center **309** is not present, then light **315** or other light other than color center light **310** is detected at primary output **312.** In other words, both light **315** and color center light **310** can be transmitted from primary output **312.** The absence of color center light **310** being detected at primary output **312** indicates that color center **309** is not present at location **307.**

In the event that color center light **310** is not detected at primary output **312,** laser beam **321** can be transmitted with changes in characteristics that are designed to create color center **309.** In some cases, laser beam **321** can be retransmitted with the same characteristics. Thus, the detection of light at primary output **312** can be used as feedback to determine whether color center **309** has been generated. Further, this detection can also be used to determine whether color center **309** has the desired characteristics. For example, a specific wavelength may be desired for color center **309.** If that wavelength of light is not detected at primary output **312,** color center **309** may be present, but is not the correct color center.

After manufacturing of optical waveguide system **300** is complete, primary optical waveguide **301** is used during operation of the system in which this waveguide is located. The other two waveguides, color center generation optical waveguide **302** and light relocation optical waveguide **303** are not used but remain in optical waveguide system **300** during operation of the system. Removal of these waveguides is unnecessary in these examples.

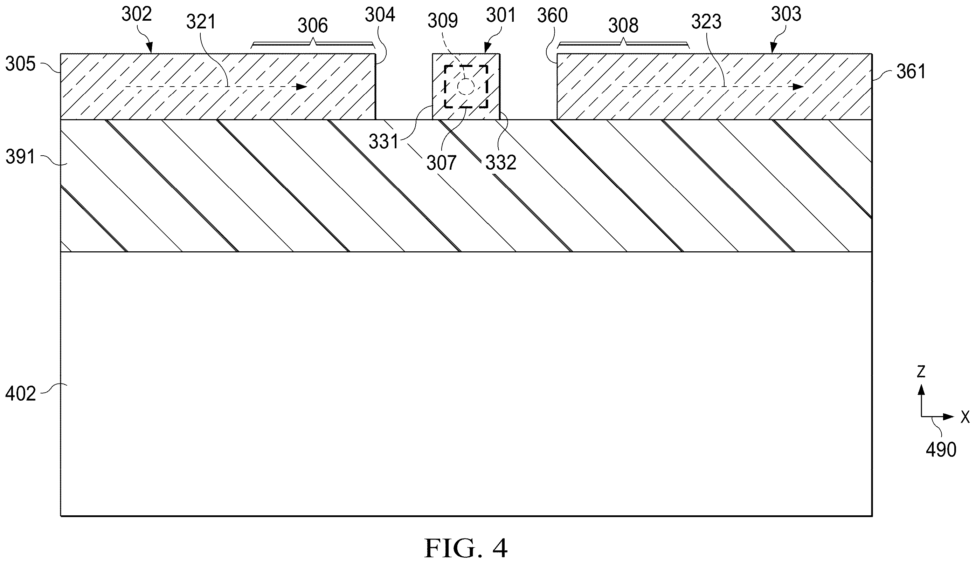

With reference to **Figure 4****,** an illustration of a cross-sectional view of a primary optical waveguide is depicted in accordance with an illustrative embodiment. In the illustrative examples, the same reference numeral may be used in more than one figure. This reuse of a reference numeral in different figures represents the same element in the different figures.

In this example, a cross-sectional view of optical waveguide system **300** is shown taken along lines **4-4** in **Figure 3****.** This view of optical waveguide system **300** is on plane XZ **490.**

As depicted, primary optical waveguide **301,** color center generation optical waveguide **302,** and light relocation optical waveguide **303** are formed on bottom cladding **391.** This bottom cladding is located on substrate **402.** In this example bottom cladding **391** can be selected from a group comprising silicon dioxide, hafnium oxide, sapphire, and some other suitable material.

As depicted in this view, laser beam **321** is emitted from output **304** of color center generation optical waveguide **302.** Laser beam **321** enters on first side **331** and with light **323** resulting from laser beam **321,** propagates through location **307** and exits through second side **332.**

This light is collected at input **360** of light relocation optical waveguide **303** and propagates to be output at another location at output **361.**

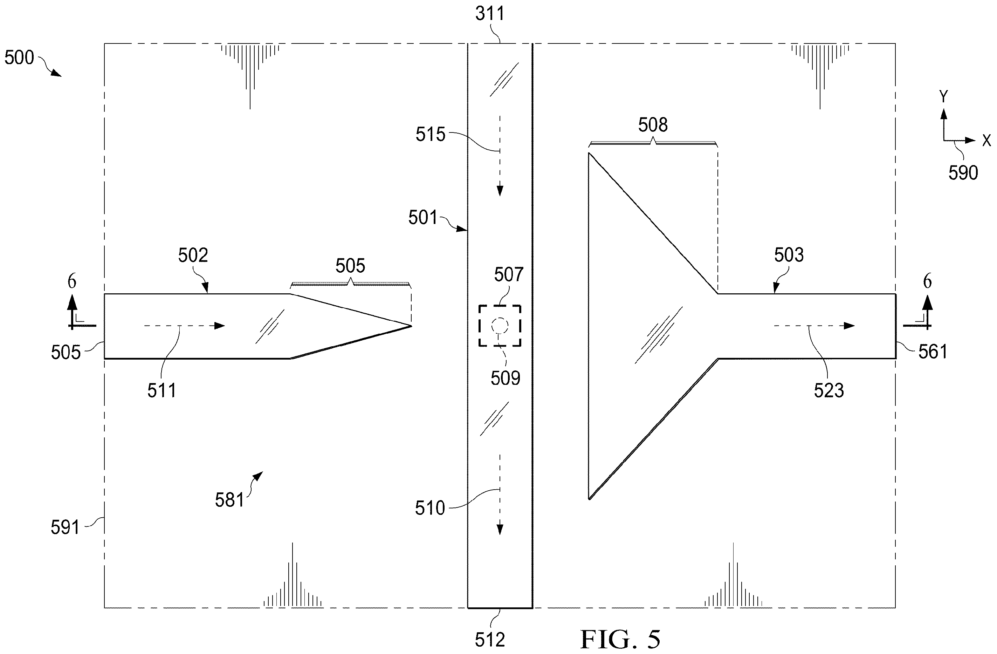

Next in **Figure 5****,** an illustration of a composite top view of optical waveguides in an optical waveguide system is depicted in accordance with an illustrative embodiment. In this example, optical waveguide system **500** is an example of an implementation of optical waveguide system **210** in **Figure 2****.**

As depicted, in this composite top view, top cladding **591** is shown with underlying waveguides **581** being visible in top cladding **591.** In this example, top cladding **591** can be silicon dioxide, hafnium oxide, or some suitable material. Underlying waveguides **581** in optical waveguide system **500** comprise primary optical waveguide **501,** color center generation optical waveguide **502,** and light relocation optical waveguide **503.** These waveguides are depicted from a top view on an XY plane **590.**

As depicted, color center generation optical waveguide **502** has tapered section **505** that tapers down in width. In this illustrative example, pulsed laser beam **511** has a wavelength that is transmitted into and propagates through color center generation optical waveguide **302** to be transmitted into primary optical waveguide **501.** This laser beam propagates though location **507** with characteristics selected to generate color center **509.**

As depicted, color center generation optical waveguide **502** is positioned to be perpendicular or substantially perpendicular to the light of travel through primary optical waveguide **501** at location **507.**

In this example, light relocation optical waveguide **503** is designed to collect light **523** resulting from laser beam **511** propagating through primary optical waveguide **501** at location **507** and exiting primary optical waveguide **501.** This light is propagated to another location without light **523** substantially interacting with primary optical waveguide **501.** In this example, light relocation optical waveguide **503** has tapered structure **508.**

Further in this illustrative example, light **515** is an excitation light that can be transmitted into primary optical waveguide **301.** Light **515** has a wavelength that is selected to excite color center **509** in location **307.** In this example, the wavelength of light **515** is different from the wavelength used for laser beam **321.**

When color center **309** is present, color center **309** is excited and emits color center light **510** that is detected. This color center light has a wavelength that is expected in response to excitation of color center **509.** During manufacturing of color center **509,** this color center light can be detected to indicate that color center **309** has been generated. If color center **309** is not present, color center light **510** is not detected.

Primary optical waveguide **501** is used during operation of optical waveguide system **300** after manufacturing is complete. The other two waveguides, color center generation optical waveguide **502** and light relocation optical waveguide **503,** remain but are not used in these examples.

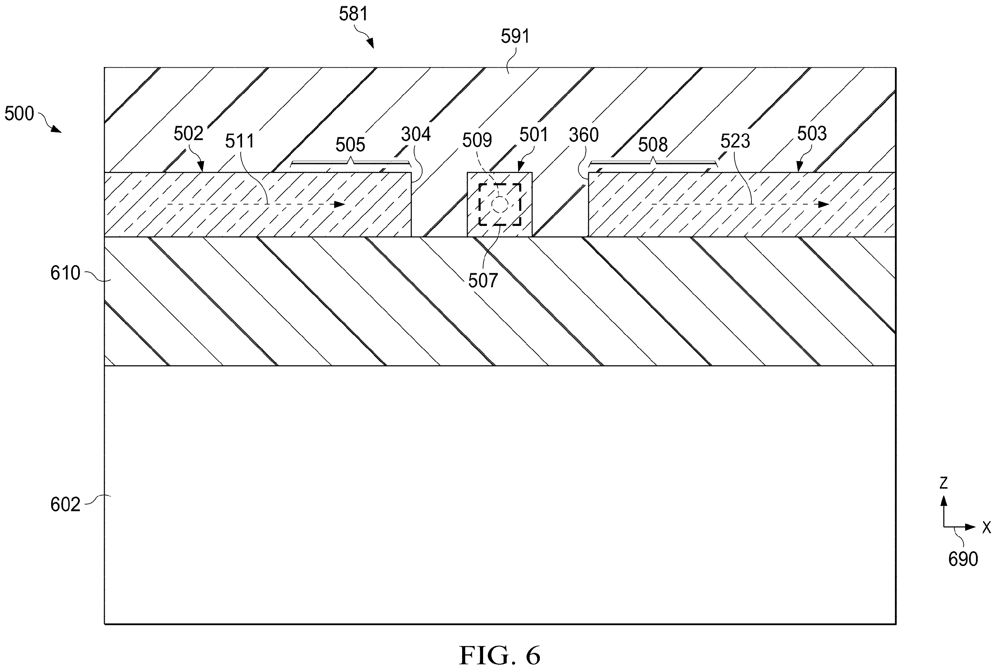

With reference to **Figure 6****,** an illustration of a cross-sectional view of a primary optical waveguide is depicted in accordance with an illustrative embodiment. This cross-sectional view of optical waveguide system **500** is shown taken along lines **6-6** in **Figure 5****.** This view of optical waveguide system **500** is on plane XZ **690.**

As depicted, primary optical waveguide **501,** color center generation optical waveguide **502,** and light relocation optical waveguide **503** are formed on bottom cladding **610.** This bottom cladding is located on substrate **602.** These waveguides are encompassed in top cladding **591.**

As depicted in this view, laser beam **511** is emitted from color center generation optical waveguide **302** and propagates through location **507** and with light **523** resulting from laser beam **321** propagating through location **307** and exiting primary optical waveguide **501** to be collected by light relocation optical waveguide **303.** This collected light is propagated to another location.

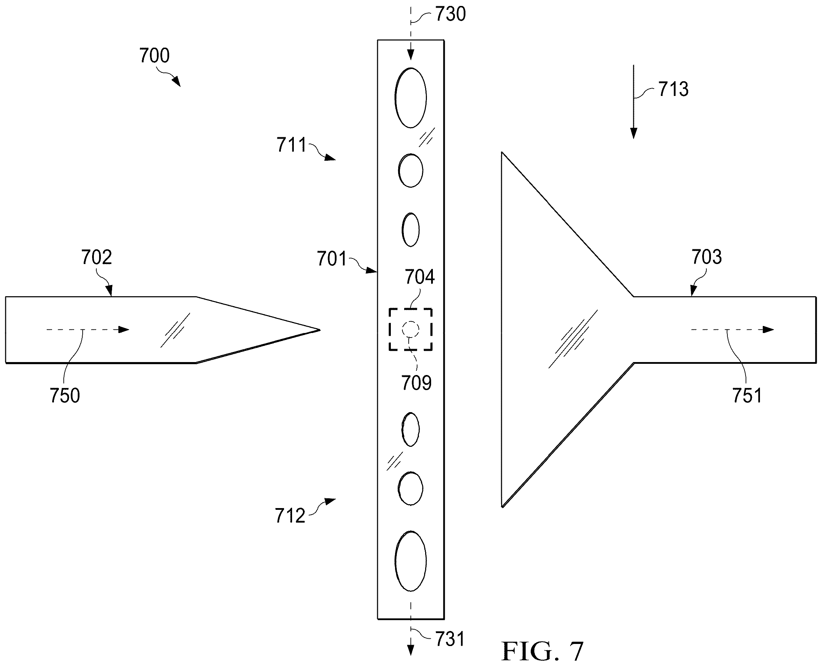

Next in **Figure 7****,** an illustration of a top view of optical waveguides in an optical waveguide system is depicted in accordance with an illustrative embodiment. Optical waveguide system **700** is an example of an implementation of optical waveguide system **210** in **Figure 2****.**

As depicted, optical waveguide system **700** comprises primary optical waveguide **701,** color center generation optical waveguide **702,** and light relocation optical waveguide **703.** In this example, primary optical waveguide **701** comprises first openings **711** and second openings **712.** First openings **711** are located prior to location **704** in direction **713** of light travel in primary optical waveguide **701.** Second openings **712** are located after location **704** in direction **713** of light travel in primary optical waveguide **701.** These openings can be used to filter undesired wavelengths of light or pass light with desired wavelengths.

In this example, laser beam **750** is transmitted from color center generation optical waveguide **702** into primary optical waveguide **701.** This laser beam propagates through location **704.** In this depicted example, light **751** resulting from the propagation of laser beam **750** through location **704** exits primary optical waveguide **701** to be collected by relocation optical waveguide **703.** Laser beam **750** has characteristics selected to generate color center **709** in location **704.**

During testing to determine whether color center **709** has been created and during normal operation, light **730** enters primary optical waveguide **701.** First openings **711** can operate to filter light **730** such that light **730** has a desired wavelength or wavelengths. The number of wavelengths in light **730** filtered by these openings can be used to excite color center **709.** The excitation of color center **709** generates color center light **731** that can then be used for further operations.

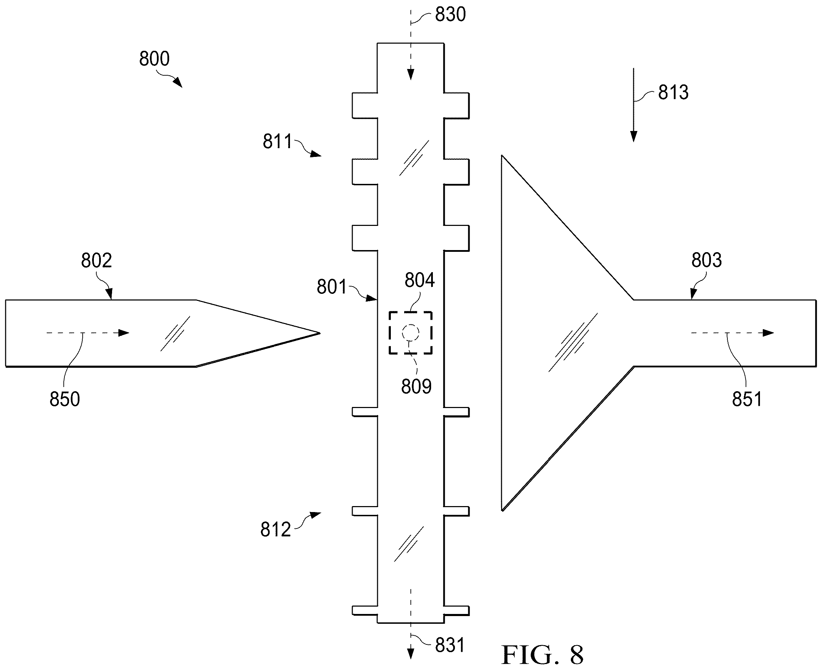

Turning to **Figure 8****,** an illustration of a top view of optical waveguides in an optical waveguide system is depicted in accordance with an illustrative embodiment. Optical waveguide system **800** is an example of an implementation of optical waveguide system **210** in **Figure 2****.**

As depicted, optical waveguide system **800** comprises primary optical waveguide **801,** color center generation optical waveguide **802,** and light relocation optical waveguide **803.** In this example, primary optical waveguide **801** comprises first periodic width changes **811** and second periodic width changes **812.** First periodic width changes **811** are located prior to location **804** in direction **813** of light travel in primary optical waveguide **801.** Second periodic width changes **812** are located after location **804** in direction **813** of light travel in primary optical waveguide **801.** These widths can be used to filter undesired wavelengths of light or pass light with desired wavelengths. These types of periodic changes are for bride filters. With this example, primary optical waveguide **801** is also referred to as a bride optical waveguide.

In this example, laser beam **850** is transmitted from color center generation optical waveguide **802** into primary optical waveguide **801.** This laser beam propagates through location **804.** In this example, light **851** resulting from the propagation of laser beam **750** through location **804** exits primary optical waveguide **801** to be collected by relocation optical waveguide **803.** Laser beam **850** has characteristics selected to generate color center **809** in location **804.**

During testing to determine whether color center **809** has been created and during normal operation, light **830** enters primary optical waveguide **801.** First periodic width changes **811** can operate to filter light **830** such that light **830** has a desired number of wavelengths. The number of wavelengths in light **830** filtered by these openings can be used to excite color center **809.** The excitation of color center **809** generates color center light **831.**

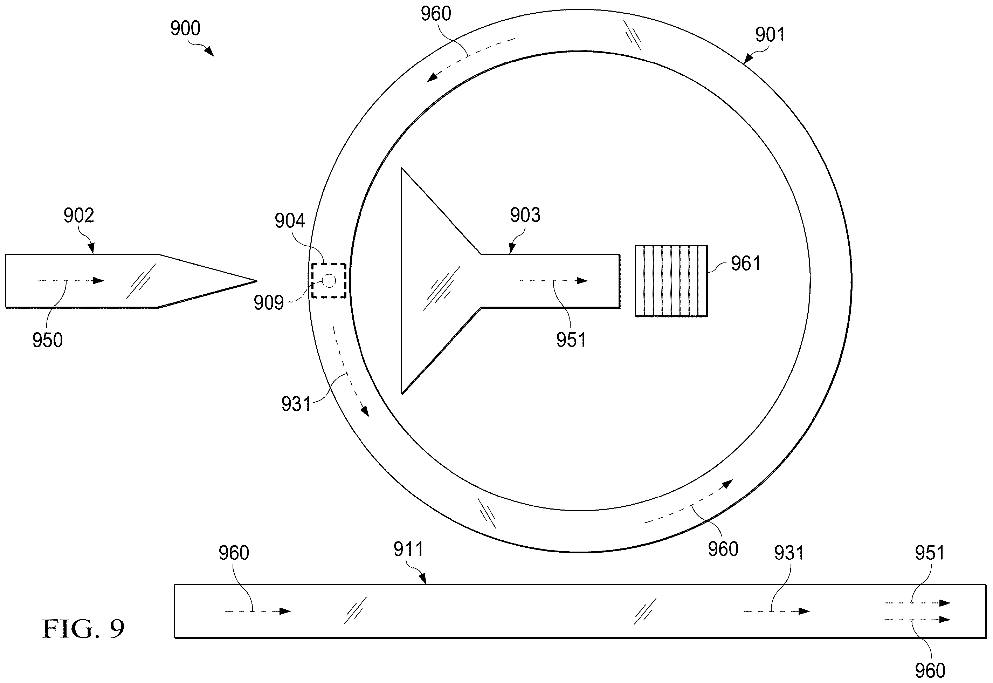

Referring to **Figure 9****,** an illustration of a top view of optical waveguides in an optical waveguide system is depicted in accordance with an illustrative embodiment. Optical waveguide system **900** is an example of an implementation of optical waveguide system **210** in **Figure 2****.**

In this example, optical waveguide system **900** comprises microring resonator **901,** bus waveguide **911,** color center generation optical waveguide **902,** and light relocation optical waveguide **903.** Microring resonator **901** is an example of an implementation for a primary optical waveguide.

In this example, laser beam **950** is transmitted from color center generation optical waveguide **802** into microring resonator **901.** This laser beam propagates through location **904.** Laser beam **950** has characteristics selected to generate color center **909** in location **904.**

In this illustrative example, light **951** resulting from the propagation of laser beam **950** through location **904** is collected by relocation optical waveguide **903.** In this example, relocation optical waveguide **903** is connected to grating coupler **961.** These two components propagate light **951** to another location such as off chip.

During testing to determine whether color center **909** has been created and during normal operation, light **960** propagates through bus waveguide **911** and becomes coupled to travel through microring resonator **901.** This light travels through location **904** in which color center **909** is located. The excitation of color center **909** generates color center light **931.** This light travels through microring resonator **901** and is coupled back into bus waveguide **911.** If this color center **909** is not present, color center light **931** is not generated. Instead, other light becomes coupled back into bus waveguide **911.**

Thus, this configuration enables creating color center **909** within location **904** without needing to send a laser beam through bus waveguide **911** as part of the color center creation process. In this manner, color centers can be generated more precisely in desired locations. Further, the creation of color centers in other undesired locations can be reduced or eliminated.

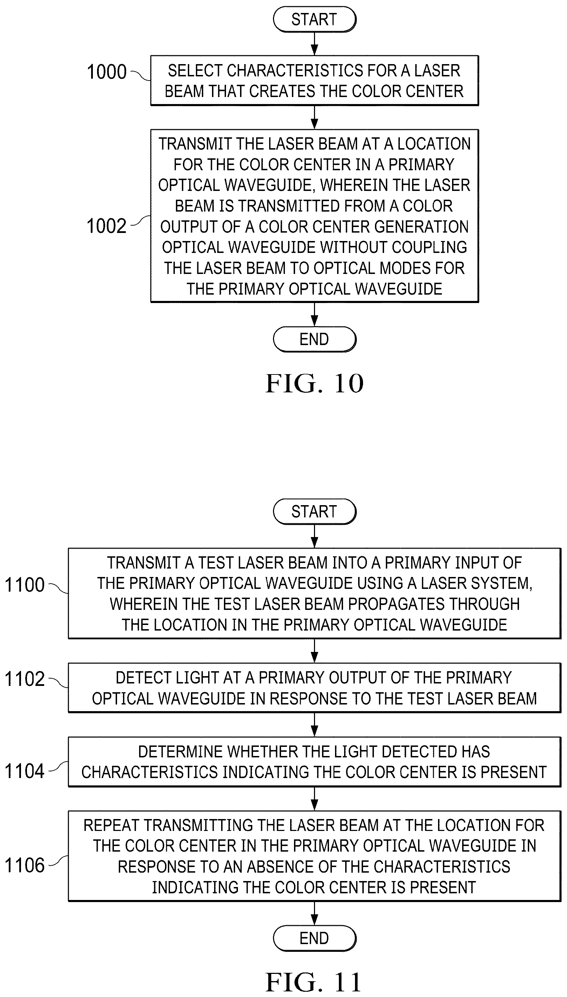

Turning next to **Figure 10****,** an illustration of a flowchart of a process for getting a color center is depicted in accordance with an illustrative embodiment. The process in **Figure 10** can be implemented in hardware, software, or both. When implemented in software, the process can take the form of program instructions that are run by one of more processor units located in one or more hardware devices in one or more computer systems. For example, the process can be implemented in controller **214** in optical waveguide color center creation system **202** in **Figure 2****.** This controller can control the operation of different components in optical waveguide system **300** to create color center **203** at location **222** in primary optical waveguide **220.**

The process selects characteristics for a laser beam that creates the color center (operation **1000).** The process transmits the laser beam at a location for the color center in a primary optical waveguide, wherein the laser beam is transmitted from a color output of a color center generation optical waveguide without coupling the laser beam to optical modes for the primary optical waveguide (operation **1002).** The process terminates thereafter.

In operation **1002,** the laser beam propagates in a travel direction that is substantially perpendicular to a direction of light travel in the primary optical waveguide at the location such that coupling the laser beam to the optical modes of the primary optical waveguide is avoided. The laser beam is selected from a group comprising a pulsed laser beam and a continuous laser beam. Further, the laser beam has beam characteristics selected from at least one of a number of pulses, an energy per pulse, a temporal pulse width, or a wavelength that are selected to generate the color center at the location, or other characteristics selected to generate color centers.

With reference next to **Figure 11****,** an illustration of a flowchart of a process for determining whether a color center has been created is depicted in accordance with an illustrative embodiment. The operations in this figure are an example of additional operations that can be performed with the operations in **Figure 10****.**

The process transmits a test laser beam into a primary input of the primary optical waveguide using a laser system, wherein the test laser beam propagates through the location in the primary optical waveguide (operation **1100).** The process detects light at a primary output of the primary optical waveguide in response to the test laser beam (operation **1102).**

The process determines whether the light detected has characteristics indicating the color center is present (operation **1104).** The process repeats transmitting the laser beam at the location for the color center in the primary optical waveguide in response to an absence of the characteristics indicating the color center is present (operation **1106).** The process terminates thereafter. This transmitting of the laser been in operation **1106** can be used for the same or different laser beam characteristics.

In this example, the feedback from detecting the light emitted by the primary optical waveguides from receiving the test laser beam is used to determine whether to repeat transmitting the laser beam through the location.

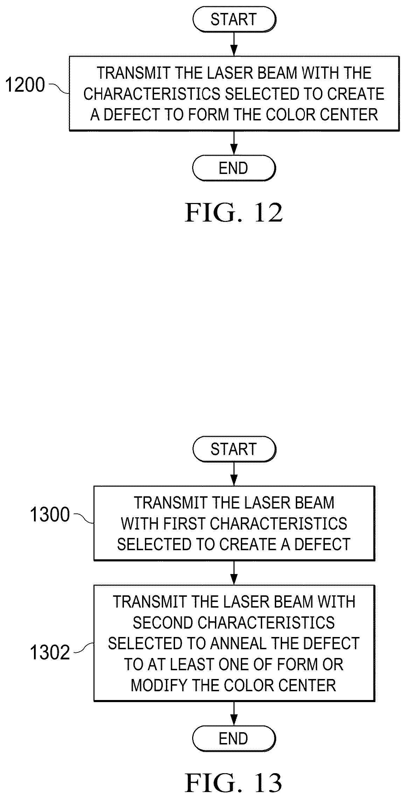

Next in **Figure 12****,** an illustration of a flowchart of a process for transmitting a laser beam is depicted in accordance with an illustrative embodiment. The operations in this figure are an example of an implementation for operation **1002** in **Figure 10****.**

The process transmits the laser beam with the characteristics selected to create a defect to form the color center (operation **1200).** The process terminates thereafter.

Turning to **Figure 13****,** an illustration of a flowchart of a process for transmitting a laser beam is depicted in accordance with an illustrative embodiment. The operations in this figure are an example of an implementation for operation **1002** in **Figure 10****.**

The process transmits the laser beam with first characteristics selected to create a defect (operation **1300).** The process transmits the laser beam with second characteristics selected to anneal the defect to at least one of form or modify the color center (operation **1302).** The process terminates thereafter.

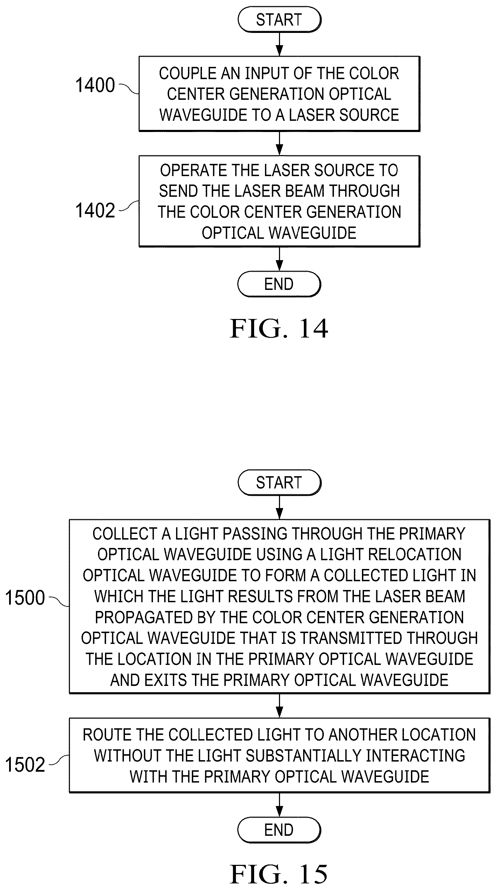

With reference to **Figure 14****,** an illustration of a flowchart of a process for coupling an input in a waveguide is depicted in accordance with an illustrative embodiment. The operations in this figure are an example of additional operations that can be performed with the operations in **Figure 10****.**

The process couples an input of the color center generation optical waveguide to a laser source (operation **1400).** The process operates the laser source to send the laser beam through the color center generation optical waveguide (operation **1402).** The process terminates thereafter.

Turning now to **Figure 15****,** an illustration of a flowchart of a process for routing light generated from transmitting a laser beam through a primary waveguide is depicted in accordance with an illustrative embodiment. The process in this flowchart is an example of additional operations that can be performed with the operations in **Figure 10****.**

The process collects a light passing through the primary optical waveguide using a light relocation optical waveguide to form a collected light in which the light results from the laser beam propagated by the color center generation optical waveguide that is transmitted through the location in the primary optical waveguide and exits the primary optical waveguide (operation **1500).** The process routes the collected light to another location without the light substantially interacting with the primary optical waveguide (operation **1502).** The process terminates thereafter.

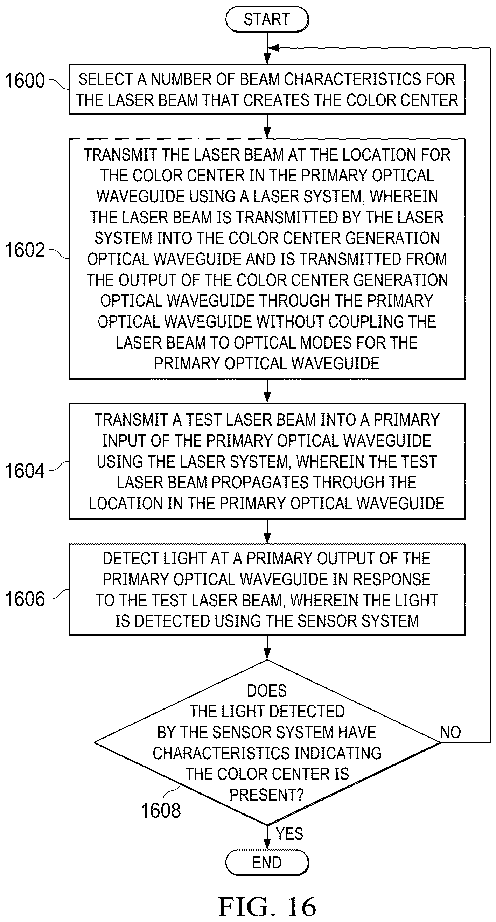

Turning next to **Figure 16****,** an illustration of a flowchart of a process for generating a color center is depicted in accordance with an illustrative embodiment. The process in **Figure 10** can be implemented in hardware, software, or both. When implemented in software, the process can take the form of program instructions that are run by one of more processor units located in one or more hardware devices in one or more computer systems. For example, the process can be implemented in controller **214** in optical waveguide color center creation system **202** in **Figure 2****.** This controller can control the operation of different components in optical waveguide system **300** to create color center **203** at location **222** in primary optical waveguide **220.**

The process begins by selecting a number of beam characteristics for the laser beam that creates the color center (operation **1600).** The process transmits the laser beam at the location for the color center in the primary optical waveguide using a laser system, wherein the laser beam is transmitted by the laser system into the color center generation optical waveguide and is transmitted from the output of the color center generation optical waveguide through the primary optical waveguide without coupling the laser beam to optical modes for the primary optical waveguide (operation **1602).**

The process transmits a test laser beam into a primary input of the primary optical waveguide using the laser system, wherein the test laser beam propagates through the location in the primary optical waveguide (operation **1604).**

The process detects light at a primary output of the primary optical waveguide in response to the test laser beam, wherein the light is detected using the sensor system (operation **1606).** In operation **1606,** the sensor system used is designed or configured to detect light having characteristics of the color center that is to be generated at the location. The process determines whether the light detected by the sensor system has characteristics indicating the color center is present (operation **1608).**

The process returns to operation **1600** in response to the determination that the light does not have characteristics indicating the color center is present. Otherwise, the process terminates.

When the process returns to operation **1600,** the beam characteristics selected can be changed to increase the likelihood of generating a color center at the location.

The flowcharts and block diagrams in the different depicted embodiments illustrate the architecture, functionality, and operation of some possible implementations of apparatuses and methods in an illustrative embodiment. In this regard, each block in the flowcharts or block diagrams can represent at least one of a module, a segment, a function, or a portion of an operation or step. For example, one or more of the blocks can be implemented as program instructions, hardware, or a combination of the program instructions and hardware. When implemented in hardware, the hardware can, for example, take the form of integrated circuits that are manufactured or configured to perform one or more operations in the flowcharts or block diagrams. When implemented as a combination of program instructions and hardware, the implementation may take the form of firmware. Each block in the flowcharts or the block diagrams can be implemented using special purpose hardware systems that perform the different operations or combinations of special purpose hardware and program instructions run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

Thus, the illustrative examples provide a method, apparatus, and system for color generating color centers in optical waveguides. In one illustrative example, an optical waveguide system comprising a primary optical waveguide and a color center generation optical waveguide. The primary optical waveguide comprises a material at a location in the primary optical waveguide that can support formation of a color center. The color center generation optical waveguide has an output positioned substantially perpendicular to a direction of light travel at the location in the primary optical waveguide. The output is directed at the location.

In the illustrative examples, the color generation optical waveguide is created on the same substrate as the primary optical waveguide. This color generation optical waveguide is present for the purpose of generating a color center within the primary optical waveguide. This color generation optical waveguide does not need to be removed after creating the color center.

Further, in some illustrative examples, the primary optical waveguide can be tested after the laser beam has been transmitted into and propagates through the location where the color center is desired. This testing can be performed by transmitting light through the primary optical waveguide as would be done during normal operation. The light output of the primary optical waveguide is analyzed to determine whether the light has characteristics indicating that the color center is present. If a color center is not present, a laser beam can be transmitted again with the same or different characteristics for creating the color center.

These different operations can be performed at the same station or location without needing to move the optical waveguide system to another location for testing or inspection by other complex equipment.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

The disclosure also includes the following numbered clauses:
Clause 1. An optical waveguide system comprising:
   a primary optical waveguide comprising a material at a location in the primary optical waveguide that can support formation of a color center; and
   a color center generation optical waveguide with an output positioned substantially perpendicular to a direction of light travel at the location in the primary optical waveguide, wherein the output is directed at the location.
Clause 2. The optical waveguide system of clause 1, wherein the color center generation optical waveguide is located on a first side of the primary optical waveguide and further comprising:
   a light relocation optical waveguide located on a second side of the primary optical waveguide, wherein the light relocation optical waveguide is positioned to collect a light exiting the primary optical waveguide and propagate the light to another location without the light substantially interacting with the primary optical waveguide, wherein
   the light results from a laser beam transmitted by the color center generation optical waveguide that propagates through the location in the primary optical waveguide and exits the primary optical waveguide.
Clause 3. The optical waveguide system of clause 2, wherein the light relocation optical waveguide has a tapered structure that collects the light exiting the primary optical waveguide, wherein a first end of the light relocation optical waveguide closer to the primary optical waveguide is broader than a second end of the light relocation optical waveguide.
Clause 4. The optical waveguide system of any preceding clause, wherein a gap is present between the primary optical waveguide and the output of the color center generation optical waveguide.
Clause 5. The optical waveguide system of any preceding clause, wherein a laser beam entering the color center generation optical waveguide and transmitted from the output through the primary optical waveguide does not substantially couple to optical modes for the primary optical waveguide.
Clause 6. The optical waveguide system of any preceding clause, wherein the color center generation optical waveguide has an input configured to be coupled to a laser source that generates a laser beam that is transmitted from the output through the primary optical waveguide.
Clause 7. The optical waveguide system of clause 6, wherein the laser beam is selected from a group comprising a pulsed laser beam and a continuous laser beam.
Clause 8. The optical waveguide system of clause 6 or clause 7, wherein the laser beam has beam characteristics selected from at least one of a number of pulses, an energy per pulse, a temporal pulse width, or a wavelength that are selected to generate the color center at the location.
Clause 9. The optical waveguide system of clause 8, wherein the beam characteristics of the laser beam are selected to create a defect to form the color center.
Clause 10. The optical waveguide system of clause 8, wherein the beam characteristics of the laser beam are selected to create a defect and subsequently to anneal the defect to at least one of form or modify the color center.
Clause 11. The optical waveguide system of clause 10, wherein the laser beam has a first wavelength selected to create the defect and the laser beam has a second wavelength selected to anneal the defect.
Clause 12. The optical waveguide system of any preceding clause, wherein the primary optical waveguide is comprised of a first material at the location and the color center generation optical waveguide is comprised of a second material that is different from the first material.
Clause 13. The optical waveguide system of any preceding clause, wherein the primary optical waveguide has a width at the location that is narrower than other portions of the primary optical waveguide.
Clause 14. The optical waveguide system of any preceding clause, wherein the color center generation optical waveguide has a section that narrows to form a tapered section including the output.
Clause 15. The optical waveguide system of any preceding clause, wherein the primary optical waveguide comprises:
   an optical waveguide;
   the location in the optical waveguide with the color center;
   a first number of openings in the optical waveguide prior to the location; and
   a second number of openings in the optical waveguide after the location.
Clause 16. The optical waveguide system of any of clauses 1 to 14, wherein primary optical waveguide is a bragg optical waveguide comprising:
   an optical waveguide;
   the location in the optical waveguide with the color center;
   a first number of periodic width changes in the optical waveguide prior to the location; and
   a second number of period width changes in the optical waveguide subsequent the location.
Clause 17. The optical waveguide system of any preceding clause, wherein the primary optical waveguide comprises:
   a microring resonator with a location for the color center; and
   a bus waveguide positioned adjacent to the microring resonator such that the bus waveguide couples light traveling through the microring resonator.
Clause 18. The optical waveguide system of clause 17 further comprising:
   a light relocation optical waveguide located within the microring resonator, wherein the light relocation optical waveguide collects light exiting the primary optical waveguide and routes the light to another location without the light substantially interacting with the microring resonator and the bus waveguide, wherein a first end of the light relocation optical waveguide closer to the primary optical waveguide is broader than a second end of the light relocation optical waveguide that propagates the light to the another location without the light substantially interacting with the microring resonator and the bus waveguide.
Clause 19. The optical waveguide system of any preceding clause further comprising:
   a laser system;
   a light sensor system; and
   a controller configured to perform operations comprising:
      selecting a number of beam characteristics for a laser beam that creates the color center;
   transmitting the laser beam at the location for the color center in the primary optical waveguide using a laser system, wherein the laser beam is transmitted by the laser system into the color center generation optical waveguide and is transmitted from the output of the color center generation optical waveguide through the primary optical waveguide without coupling the laser beam to optical modes for the primary optical waveguide;
   transmitting a test laser beam into a primary input of the primary optical waveguide using the laser system, wherein the test laser beam propagates through the location in the primary optical waveguide;
      detecting light at a primary output of the primary optical waveguide in response to the test laser beam, wherein the light is detected using the sensor system;
      determining whether the light detected by the sensor system has characteristics indicating the color center is present; and
      repeating transmitting the laser beam at the location for the color center in the primary optical waveguide in response to an absence of the characteristics indicating the color center is present.
Clause 20. An optical waveguide system comprising:
   a primary optical waveguide comprising a material at a location in the primary optical waveguide that can support formation of a color center;
   a color center generation optical waveguide with a tapered section having an output positioned substantially perpendicular to a direction of light travel at the location in the primary optical waveguide, wherein the output is directed at the location and;
   a gap between the primary optical waveguide and the output of the color center generation optical waveguide.
Clause 21. A method for creating a color center, the method comprising:
   selecting characteristics for a laser beam that creates the color center; and transmitting the laser beam at a location for the color center in a primary optical waveguide, wherein the laser beam is transmitted from a color output of a color center generation optical waveguide without coupling the laser beam to optical modes for the primary optical waveguide.
Clause 22. The method of clause 21 further comprising:
   transmitting a test laser beam into a primary input of the primary optical waveguide using a laser system, wherein the test laser beam propagates through the location in the primary optical waveguide;
   detecting light at a primary output of the primary optical waveguide in response to the test laser beam;
   determining whether the light detected has characteristics indicating the color center is present; and
   repeating transmitting the laser beam at the location for the color center in the primary optical waveguide in response to an absence of the characteristics indicating the color center is present.
Clause 23. The method of clause 21 or clause 22, wherein transmitting the laser beam comprises:
   transmitting the laser beam with the characteristics selected to create a defect to form the color center.
Clause 24. The method of any of clauses 21 to 23, wherein transmitting the laser beam comprises:
   transmitting the laser beam with first characteristics selected to create a defect; and
   transmitting the laser beam with second characteristics selected to anneal the defect to at least one of form or modify the color center.
Clause 25. The method of any of clauses 21 to 24 further comprising:
   coupling an input of the color center generation optical waveguide to a laser source; and
   operating the laser source to send the laser beam through the color center generation optical waveguide.
Clause 26. The method of any of clauses 21 to 25 further comprising:
   collecting a light passing through the primary optical waveguide using a light relocation optical waveguide to form a collected light in which the light results from the laser beam propagated by the color center generation optical waveguide that is transmitted through the location in the primary optical waveguide and exits the primary optical waveguide; and
   routing the collected light to another location without the light substantially interacting with the optical waveguide to the another location without the light substantially interacting with the primary optical waveguide.
Clause 27. The method of any of clauses 21 to 26, wherein the laser beam propagates in a travel direction that is substantially perpendicular to a direction of light travel in the primary optical waveguide at the location such that coupling the laser beam to the optical modes of the primary optical waveguide is avoided.
Clause 28. The method of any preceding clause 21 to 27, wherein the laser beam is selected from a group comprising a pulsed laser beam and a continuous laser beam.
Clause 29. The method of any of clauses 21 to 28, wherein the laser beam has beam characteristics selected from at least one of a number of pulses, an energy per pulse, a temporal pulse width, or a wavelength that are selected to generate the color center at the location.
Clause 30. The method of any of clauses 21 to 29 performed using the optical waveguide system of any of clauses 1 to 20.
Clause 31. A computer readable medium configured to, when executed by a processor, cause the processor to perform the method of any of clauses 21 to 29. Clause 32. The optical waveguide system of any of clauses 1 to 20 comprising a controller comprising a processor and the computer readable medium of clause 31.

## Claims

1. An optical waveguide system (104, 210, 300, 500, 700, 800, 900) comprising:
a primary optical waveguide (120, 220, 301, 501, 701, 801) comprising a material at a location (222, 307, 507, 704, 804, 904) in the primary optical waveguide (120, 220, 301, 501, 701, 801) that can support formation of a color center (203, 309, 509, 709, 809, 909); and
a color center generation optical waveguide (121, 221,302, 502, 702, 802, 902) with an output (223, 304,) positioned substantially perpendicular to a direction of light travel at the location (222, 307, 507, 704, 804, 904) in the primary optical waveguide (120, 220, 301, 501, 701, 801), wherein the output (223, 304,) is directed at the location (222, 307, 507, 704, 804, 904).

2. The optical waveguide system (104, 210, 300, 500, 700, 800, 900) of claim 1, wherein the color center generation optical waveguide (121, 221,302, 502, 702, 802, 902) is located on a first side of the primary optical waveguide (120, 220, 301, 501, 701, 801) and further comprising:
a light relocation optical waveguide (227, 303, 503, 703, 803, 903) located on a second side of the primary optical waveguide (120, 220, 301, 501, 701, 801), wherein the light relocation optical waveguide (227, 303, 503, 703, 803, 903) is positioned to collect a light exiting the primary optical waveguide (120, 220, 301, 501, 701, 801) and propagate the light to another location (222, 307, 507, 704, 804, 904) without the light substantially interacting with the primary optical waveguide (120, 220, 301, 501, 701, 801), wherein the light results from a laser beam (228, 321, 511, 750, 850, 950) transmitted by the color center generation optical waveguide (121, 221,302, 502, 702, 802, 902) that propagates through the location (222, 307, 507, 704, 804, 904) in the primary optical waveguide (120, 220, 301, 501, 701, 801) and exits the primary optical waveguide (120, 220, 301, 501, 701, 801), optionally wherein the light relocation optical waveguide (227, 303, 503, 703, 803, 903) has a tapered structure (271, 308, 508) that collects the light exiting the primary optical waveguide (120, 220, 301, 501, 701, 801), wherein a first end of the light relocation optical waveguide (227, 303, 503, 703, 803, 903) closer to the primary optical waveguide (120, 220, 301, 501, 701, 801) is broader than a second end of the light relocation optical waveguide (227, 303, 503, 703, 803, 903).

3. The optical waveguide system (104, 210, 300, 500, 700, 800, 900) of claim 2, wherein a gap (230) is present between the primary optical waveguide (120, 220, 301, 501, 701, 801) and the output (223, 304,) of the color center generation optical waveguide (121, 221,302, 502, 702, 802, 902) and/or
configured such that a laser beam (228, 321, 511, 750, 850, 950) entering the color center generation optical waveguide (121, 221,302, 502, 702, 802, 902) and transmitted from the output (223, 304,) through the primary optical waveguide (120, 220, 301, 501, 701, 801) does not substantially couple to optical modes (231) for the primary optical waveguide (120, 220, 301, 501, 701, 801).

4. The optical waveguide system (104, 210, 300, 500, 700, 800, 900) of any preceding claim, wherein the color center generation optical waveguide (121, 221,302, 502, 702, 802, 902) has an input (233, 305, 505) configured to be coupled to a laser source that generates a laser beam (228, 321, 511, 750, 850, 950) that is transmitted from the output (223, 304,) through the primary optical waveguide (120, 220, 301, 501, 701, 801).

5. The optical waveguide system (104, 210, 300, 500, 700, 800, 900) of claim 4, wherein the laser beam (228, 321, 511, 750, 850, 950) has beam characteristics selected from at least one of a number of pulses, an energy per pulse, a temporal pulse width, or a wavelength that are selected to generate the color center (203, 309, 509, 709, 809, 909) at the location (222, 307, 507, 704, 804, 904).

6. The optical waveguide system (104, 210, 300, 500, 700, 800, 900) of claim 5, wherein the beam characteristics of the laser beam (228, 321, 511, 750, 850, 950) are selected to either:
create a defect to form the color center (203, 309, 509, 709, 809, 909); or
create a defect and subsequently to anneal the defect to at least one of form or modify the color center (203, 309, 509, 709, 809, 909), wherein the laser beam (228, 321, 511, 750, 850, 950) has a first wavelength selected to create the defect and the laser beam (228, 321, 511, 750, 850, 950) has a second wavelength selected to anneal the defect.

7. The optical waveguide system (104, 210, 300, 500, 700, 800, 900) of any preceding claim, wherein at least one of:
the primary optical waveguide (120, 220, 301, 501, 701, 801) is comprised of a first material at the location (222, 307, 507, 704, 804, 904) and the color center generation optical waveguide (121, 221,302, 502, 702, 802, 902) is comprised of a second material that is different from the first material;
the primary optical waveguide (120, 220, 301, 501, 701, 801) has a width at the location (222, 307, 507, 704, 804, 904) that is narrower than other portions of the primary optical waveguide (120, 220, 301, 501, 701, 801); and
the color center generation optical waveguide (121, 221,302, 502, 702, 802, 902) has a section that narrows to form a tapered section including the output (361).

8. The optical waveguide system (104, 210, 300, 500, 700, 800, 900) of any preceding claim, wherein the primary optical waveguide (120, 220, 301, 501, 701, 801) comprises:
an optical waveguide;
the location (222, 307, 507, 704, 804, 904) in the optical waveguide with the color center (203, 309, 509, 709, 809, 909); and one of:
a) a first number of openings in the optical waveguide prior to the location (222, 307, 507, 704, 804, 904); and a second number of openings in the optical waveguide after the location (222, 307, 507, 704, 804, 904); and
b) a first number of periodic width changes in the optical waveguide prior to the location (222, 307, 507, 704, 804, 904); and a second number of period width changes in the optical waveguide subsequent the location (222, 307, 507, 704, 804, 904).

9. The optical waveguide system (104, 210, 300, 500, 700, 800, 900) of any preceding claim, wherein the primary optical waveguide (120, 220, 301, 501, 701, 801) comprises:
a microring resonator (901) with a location (222, 307, 507, 704, 804, 904) for the color center (203, 309, 509, 709, 809, 909); and
a bus waveguide (911) positioned adjacent to the microring resonator (901) such that the bus waveguide (911) couples light traveling through the microring resonator (901), and optionally comprising:
a light relocation optical waveguide (227, 303, 503, 703, 803, 903) located within the microring resonator (901), wherein the light relocation optical waveguide (227, 303, 503, 703, 803, 903) collects light exiting the primary optical waveguide (120, 220, 301, 501, 701, 801) and routes the light to another location (222, 307, 507, 704, 804, 904) without the light substantially interacting with the microring resonator (901) and the bus waveguide (911), wherein a first end of the light relocation optical waveguide (227, 303, 503, 703, 803, 903) closer to the primary optical waveguide (120, 220, 301, 501, 701, 801) is broader than a second end of the light relocation optical waveguide (227, 303, 503, 703, 803, 903) that propagates the light to the another location (222, 307, 507, 704, 804, 904) without the light substantially interacting with the microring resonator (901) and the bus waveguide (911).

10. The optical waveguide system (104, 210, 300, 500, 700, 800, 900) of any preceding claim further comprising:
a laser system (216);
a light sensor system (218); and
a controller (214) configured to perform operations comprising:
selecting a number of beam characteristics for a laser beam (228, 321, 511, 750, 850, 950) that creates the color center (203, 309, 509, 709, 809, 909);
transmitting the laser beam (228, 321, 511, 750, 850, 950) at the location (222, 307, 507, 704, 804, 904) for the color center (203, 309, 509, 709, 809, 909) in the primary optical waveguide (120, 220, 301, 501, 701, 801) using a laser system (216), wherein the laser beam (228, 321, 511, 750, 850, 950) is transmitted by the laser system (216) into the color center generation optical waveguide (121, 221,302, 502, 702, 802, 902) and is transmitted from the output (223, 304,) of the color center generation optical waveguide (121, 221,302, 502, 702, 802, 902) through the primary optical waveguide (120, 220, 301, 501, 701, 801) without coupling the laser beam (228, 321, 511, 750, 850, 950) to optical modes (231) for the primary optical waveguide (120, 220, 301, 501, 701, 801);
transmitting a test laser beam (261) into a primary input (254, 311) of the primary optical waveguide (120, 220, 301, 501, 701, 801) using the laser system (216), wherein the test laser beam (261) propagates through the location (222, 307, 507, 704, 804, 904) in the primary optical waveguide (120, 220, 301, 501, 701, 801);
detecting light at a primary output (225, 312) of the primary optical waveguide (120, 220, 301, 501, 701, 801) in response to the test laser beam (261), wherein the light is detected using the sensor system;
determining whether the light detected by the sensor system has characteristics indicating the color center (203, 309, 509, 709, 809, 909) is present; and
repeating transmitting the laser beam (228, 321, 511, 750, 850, 950) at the location (222, 307, 507, 704, 804, 904) for the color center (203, 309, 509, 709, 809, 909) in the primary optical waveguide (120, 220, 301, 501, 701, 801) in response to an absence of the characteristics indicating the color center (203, 309, 509, 709, 809, 909) is present.

11. A method for creating a color center (203, 309, 509, 709, 809, 909), the method comprising:
selecting (1000) characteristics for a laser beam (228, 321, 511, 750, 850, 950) that creates the color center (203, 309, 509, 709, 809, 909); and
transmitting (10003 the laser beam (228, 321, 511, 750, 850, 950) at a location (222, 307, 507, 704, 804, 904) for the color center (203, 309, 509, 709, 809, 909) in a primary optical waveguide (120, 220, 301, 501, 701, 801), wherein the laser beam (228, 321, 511, 750, 850, 950) is transmitted from a color output of a color center generation optical waveguide (121, 221,302, 502, 702, 802, 902) without coupling the laser beam (228, 321, 511, 750, 850, 950) to optical modes (231) for the primary optical waveguide (120, 220, 301, 501, 701, 801).

12. The method of claim 11 further comprising:
transmitting (1100) a test laser beam (261) into a primary input (254, 311) of the primary optical waveguide (120, 220, 301, 501, 701, 801) using a laser system (216), wherein the test laser beam (261) propagates through the location (222, 307, 507, 704, 804, 904) in the primary optical waveguide (120, 220, 301, 501, 701, 801);
detecting (1102) light at a primary output (255, 312) of the primary optical waveguide (120, 220, 301, 501, 701, 801) in response to the test laser beam (261);
determining (1104) whether the light detected has characteristics indicating the color center (203, 309, 509, 709, 809, 909) is present; and
repeating (1106) transmitting the laser beam (228, 321, 511, 750, 850, 950) at the location (222, 307, 507, 704, 804, 904) for the color center (203, 309, 509, 709, 809, 909) in the primary optical waveguide (120, 220, 301, 501, 701, 801) in response to an absence of the characteristics indicating the color center (203, 309, 509, 709, 809, 909) is present.

13. The method of claim 11 or 12, wherein transmitting (1000) the laser beam (228, 321, 511, 750, 850, 950) comprises one of:
transmitting (1200) the laser beam (228, 321, 511, 750, 850, 950) with the characteristics selected to create a defect to form the color center (203, 309, 509, 709, 809, 909); or
transmitting 1300) the laser beam (228, 321, 511, 750, 850, 950) with first characteristics selected to create a defect; and
transmitting (1302) the laser beam (228, 321, 511, 750, 850, 950) with second characteristics selected to anneal the defect to at least one of form or modify the color center (203, 309, 509, 709, 809, 909).

14. The method of any of claims 11 to 13 further comprising at least one of:
a) coupling (1400) an input (233, 305, 505) of the color center generation optical waveguide (121, 221,302, 502, 702, 802, 902) to a laser source; and
operating (1402) the laser source to send the laser beam (228, 321, 511, 750, 850, 950) through the color center generation optical waveguide (121, 221,302, 502, 702, 802, 902); and
b) collecting a light passing through the primary optical waveguide (120, 220, 301, 501, 701, 801) using a light relocation optical waveguide (227, 303, 503, 703, 803, 903) to form a collected light in which the light results from the laser beam (228, 321, 511, 750, 850, 950) propagated by the color center generation optical waveguide (121, 221,302, 502, 702, 802, 902) that is transmitted through the location (222, 307, 507, 704, 804, 904) in the primary optical waveguide (120, 220, 301, 501, 701, 801) and exits the primary optical waveguide (120, 220, 301, 501, 701, 801); and
routing (1502) the collected light to another location (222, 307, 507, 704, 804, 904) without the light substantially interacting with the optical waveguide to the another location (222, 307, 507, 704, 804, 904) without the light substantially interacting with the primary optical waveguide (120, 220, 301, 501, 701, 801).

15. The method of any of claims 11 to 14, wherein at least one of:
the laser beam (228, 321, 511, 750, 850, 950) propagates in a travel direction that is substantially perpendicular to a direction of light travel in the primary optical waveguide (120, 220, 301, 501, 701, 801) at the location (222, 307, 507, 704, 804, 904) such that coupling the laser beam (228, 321, 511, 750, 850, 950) to the optical modes (231) of the primary optical waveguide (120, 220, 301, 501, 701, 801) is avoided; and
the laser beam (228, 321, 511, 750, 850, 950) has beam characteristics selected from at least one of a number of pulses, an energy per pulse, a temporal pulse width, or a wavelength that are selected to generate the color center (203, 309, 509, 709, 809, 909) at the location (222, 307, 507, 704, 804, 904).
